Europäisches Patentamt

European Patent Office

Office européen des brevets

(11) Publication number: **0 176 514**
**B1**

(12) **EUROPEAN PATENT SPECIFICATION**

(45) Date of publication of patent specification: **08.03.89**

(21) Application number: **84902767.7**

(22) Date of filing: **12.07.84**

(86) International application number:
**PCT/AU84/00131**

(87) International publication number:
**WO 85/00339 31.01.85 Gazette 85/03**

(51) Int. Cl.⁴: **B 65 B 31/02, B 65 B 31/04,**
**B 65 B 25/02, B 65 D 81/20**

(54) **PACKAGING FOODSTUFFS.**

(30) Priority: **12.07.83 AU 246/83**
**04.04.84 AU 4421/84**

(43) Date of publication of application:
**09.04.86 Bulletin 86/15**

(45) Publication of the grant of the patent:
**08.03.89 Bulletin 89/10**

(84) Designated Contracting States:
**AT BE CH DE FR GB LI LU NL SE**

(56) References cited:
**AU-A-1 860 070**
**AU-A-2 361 877**
**AU-A-2 691 867**
**DE-A-1 939 216**
**DE-A-2 550 388**
**FR-A-2 276 223**
**GB-A- 974 180**
**GB-A-1 392 580**
**US-A-3 651 930**
**US-A-3 700 096**
**US-A-3 718 274**
**US-A-3 740 238**

(73) Proprietor: **GARWOOD LIMITED**
**557 Burwood Highway**
**Knoxfield Victoria, 3180 (AU)**

(72) Inventor: **GARWOOD, Anthony, James, Murray**
**9 Burton Court**
**Bayswater, VIC 3153 (AU)**

(74) Representative: **Abbie, Andrew Kenneth et al**
**A.A. THORNTON & CO. Northumberland House**
**303/306 High Holborn**
**London, WC1V 7LE (GB)**

(56) References cited:
**US-A-4 012 530**
**US-A-4 058 953**
**US-A-4 265 070**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to improved methods of and apparatus for producing packaging and relates particularly but not exclusively to packaging suitable for the packaging of meats and other foodstuffs which can deteriorate in air.

Hitherto, fresh meat has been packed in packages which comprise an expanded POLYSTYRENE foam tray or like plastics foam tray, and a covering of clear plastics material wrapping such as of P.V.C. or POLYETHYLENE. A problem with such prior art packages is that a purchaser can not inspect the underneath of the meat because the tray is not transparent.

It is desirable but not essential to package fresh meat in packaging where at least two sides of the meat can be viewed by an intending purchaser. When meat is packaged, meat juices can be expelled from the meat and can detract from the appearance of the meat when viewed from the underside. Thus if transparent packaging is envisaged care will have to be exercised in the design of the packaging to minimise the visual effect of any such juices which may be expelled from the meat.

It is known from FR—A—2290153 to provide a method of packaging meat including evacuating the packaging container and refilling with a gaseous mixture prior to sealing the container covering.

It is also known from FR—A—2276223 to provide a gas flushing member at one side only of the container chamber. This arrangement can cause problems in sealing. When air evacuation of the chamber is required the lid or cover must be partly lifted to allow the gas to enter.

According to one aspect of the present invention, there is provided an improved packaging method for producing an air evacuated and desired gas filled package, said method comprising: providing a cup shaped depression in a web of package material to provide a packaging base, providing a product in said depression, providing a cover for said base, providing a gas flushing member between the cover and the base and sealing said cover and said base together (FR—A—2276223), closing an air evacuation chamber over the components and the gas flushing member so that it makes a substantially air tight seal with said one face and said opposite face, evacuating air from said air evacuation chamber so that air within said depression will be evacuated, expelling desired gas from said gas passageway means so that it discharges between said cover and said base and can enter said depression, and sealing the cover to said base around the edge surfaces of said depression to provide said air evacuated and desired gas filled package, characterised in that the gas flushing member is plate like and has an opening therethrough; in that said cover is passed through said opening so that it extends from one face of the gas flushing member through said opening to the opposite face of the gas flushing member and over said depression, said gas flushing member having gas passageway means therein which terminate with said opening in the region where said cover passes through said opening from said one face.

According to another aspect of the invention, there is provided an apparatus for producing packaging comprising a gas flushing and sealing station means for receiving a base with a product therein, a cover therefor, said gas flushing and sealing station including a first chamber part and a second chamber part which together define an air evacuation chamber, said second chamber part being for receiving said bases with said product therein, said first chamber part and said second chamber part being, in use, closeable onto a gas flushing member (FR—A—2276223), characterised in that said gas flushing member is plate like and has one face and an opposite face with an opening therethrough, through which said cover can pass to extend over said base, said gas flushing member having gas passageway means therein which terminate with said opening in the region where, in use, said cover passes through said opening from said one face, and in that said first chamber part has sealing means therein for effecting sealing of said cover to said base.

In the drawings:

FIGURE 1 is a top perspective view of a tray of the packaging without showing meat therein;

FIGURE 2 is a close-up plan view of the tray of Figure 1;

FIGURE 3 is a side sectional view of the tray shown in Figure 1 taken along line 3—3 of Figure 1 but showing the tray enclosed within a plastics material outer covering;

FIGURE 4 is a schematic block diagram of a typical packaging installation at a meat processing plant;

FIGURE 5 is a schematic side view of a typical packaging machine installation;

FIGURE 6 is a close-up side cross-sectional view of a gas flushing and sealing station in the installation of Figure 5;

FIGURE 7 is a plan view of the sealing station shown in Figure 6; and

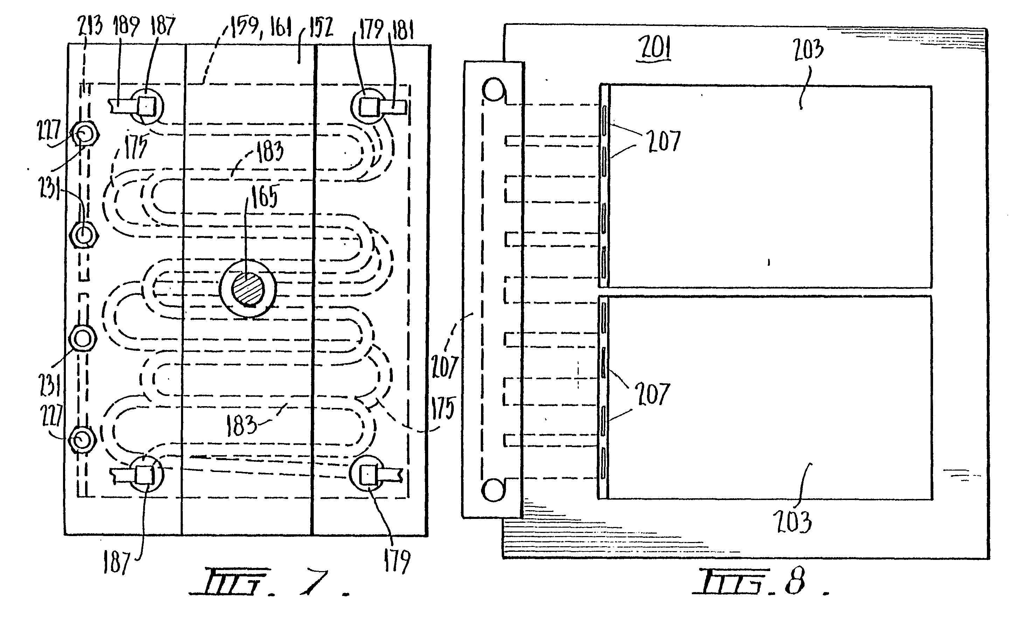

FIGURE 8 is a plan view of a desired gas introducing means.

The packaging (see Figure 3) comprises a two part outer covering 1, i.e. a lid 2 and a preform base 4. The outer covering 1 is of a transparent plastics material which will inhibit the escape of desired gas such as a product preserving and/or colour maintaining gas from the packaging. Suitable gases will be described more fully later. The covering 1 is preferably clear. The covering 1 is typically of a thickness of 75 microns and is very flexible. Typical materials from which the covering 1 can be made are co-extruded films of NYLON and POLYETHYLENE or polyester, P.V.D.C. and polyethylene.

A very rigid tray 3 is provided to support the meat. The tray 3 is thermo-formed from a preferably transparent and preferably clear plastics material such as POLYPROPYLENE. Because POLYPROPYLENE is relatively inexpensive particularly in Australia, it can be made relatively thick as in the order of 0.5 mm thickness. The cost of the materials for the tray 3 are therefore insignificant. The tray 3 is made substantially rigid by having a plurality of strengthening formations in the form of corrugations 5 therein. The corrugations 5 are in the bottom of the tray as well as in the side walls of the tray and therefore the tray 3 is extremely rigid and not likely to be dented and/or creased by dropping the package which could then cause rupturing of the covering 1 and the contamination of the meat by air which will then be admitted.

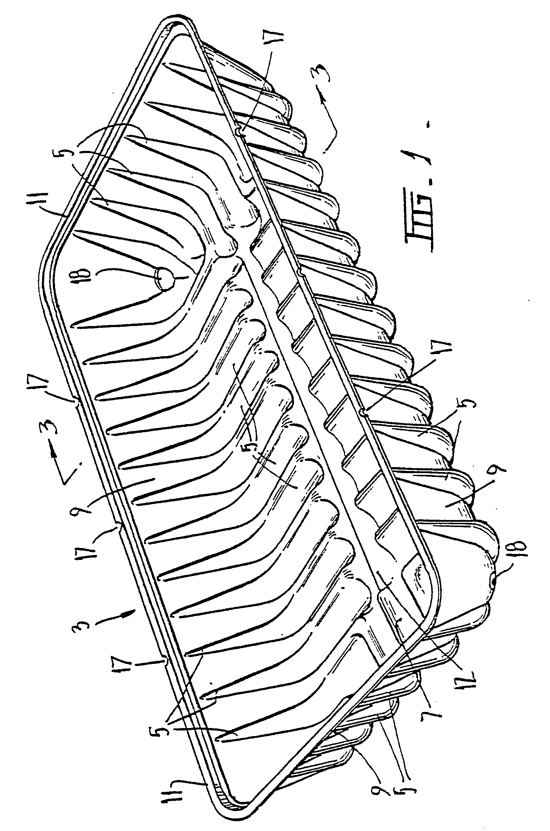

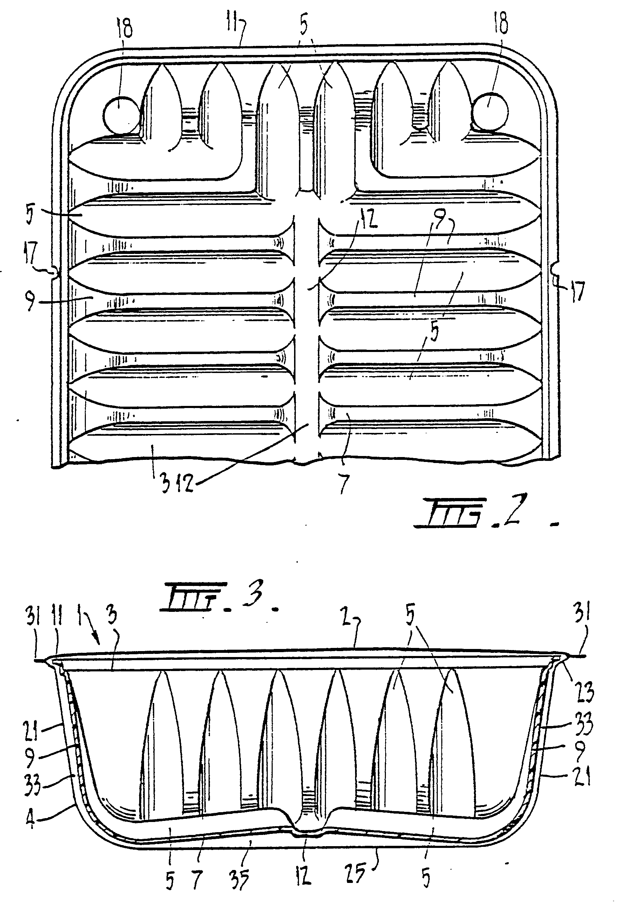

By inspecting Figure 2 it can be seen that the tray 3 has a bottom 7 and side walls 9. The upper portions of the side walls 9 in turn, connect with a peripheral lip 11. The side walls 9 are slightly outwardly inclined whereby to assist nested stacking of blanks of the trays 3 prior to them being used to form packages. The bottom 7 of the tray 3 has a somewhat gable like contour. By inspecting Figure 1 it can be seen that the gable contour extends across the package from the left hand side to the right hand side whilst when viewing across the tray 3 in a mutually perpendicular direction, the tray has a central region 12. Accordingly it can be seen that the contour of the bottom 7 of the tray 3 is such that the central region 12 is substantially higher than that of the side edges of the bottom of the tray 3 where the bottom 7 terminates with the side walls 9. It can also be observed that the corrugations 5 on the bottom 7 will act to support meat generally above the lowermost portion of the corrugations 5 therein (i.e. the troughs of the corrugations). This will support and space meat directly above the bottom 7 and the meat will only contact the actual bottom 7 along the tops of the corrugations 5 (i.e. the crests). Accordingly liquids which escape from the meat drain down the inclined surfaces of the contour of the gable shaped bottom 7 in the troughs of the corrugations to the bottom side edges of the tray 3. Accordingly, a viewer of the meat will able to inspect the meat from underneath the tray through the tray 3 and such viewing will not be greatly impaired by any liquids as the liquids will then generally be around the periphery of the bottom of the tray 3.

By inspecting Figure 1 it can be seen that there are cut-outs 17 in the lip 11 of the tray 3. Apertures 18 are provided in each bottom corner of the tray 3. The purpose of the cut-outs 17 and apertures 18 will be explained later in relation to the gas which is retained within the packaging.

In the particular embodiment herein the base 4 of the covering 1 is formed as a generally cup-shaped preformed depression in a web of covering 1. The cup-shaped depression has substantially the same dimensions as that of the tray 3. Accordingly, it can be seen that the tray 3 can be seated by nesting within the base 4. The base 4 has outwardly inclined side walls 21 which terminate with an upper horizontally extending lip 23.

The lip 23 extends outwardly away from the lip 11 of the tray 3 but it is situated close to the outermost portion of the lip 11. The bottom 25 of the base 4 extends generally horizontally and is planar as distinct from having a gable like contour.

In order to provide a package, fresh meat is placed in the tray 3, the tray 3 and the meat are then placed within the base 4 and the base 4 together with the tray 3 and the meat therein are advanced to an assembly station where the lid 2 comprising a film of covering material 1 is placed over the top of the base 4. The peripheral edges of the base 4 are then hermatically sealed as diagrammatically shown by numeral 31. The hermatic sealing is a continuous seal around the lip 23. This sealing can be performed by way of an impulse sealing technique or by other sealing techniques as will be explained later. Prior to completely sealing the lid 2 of the covering 1 to the base 4, the air within the tray 3 and the base 4 is flushed by a suitable gas which will assist in the preserving and colour keeping of the meat. The flushing process involves evacuation of the air and its replacement with the desired gas. A typical gas comprises 80% $O_2$ and 20% $CO_2$. For fresh vegetables it may comprise 5% $O_2$, 3% $CO_2$ and 92% $N_2$. By observing Figure 3 it can be seen that there are spaces 33 between the side walls of the base 4 and the side walls 9 of the tray 3. Similar spaces are provided at the ends of the tray 3. They have not been shown in the drawings. A further space 35 is provided underneath the gable like bottom 7. It can be seen that the space 35 underneath the tray 3 and the spaces 33 at the side walls of the tray 3 and the further spaces at the ends of the tray 3 may be used to contain some of the volume of the gas which is required to assist in the keeping of the meat. In this connection is is known that there needs to be approximately an equal volume of gas to the volume of the meat. Accordingly with this embodiment, the apertures 17 and 18 in the tray 3 allow the gas from the spaces 33 and 35 to circulate and add with the gas within the tray 3 and therefore represent a total volume of gas larger than that in the tray 3 alone, which assists in the keeping of the meat.

With the construction proposed herein the covering material is still a relatively expensive material but because this is of a very thin nature its cost is minimized. On the other hand the cost of the tray 3 is substantially negligible owing to the relatively inexpensive cost of the POLYPROPYLENE material. Because the tray 3 is substantially rigid it inhibits rupturing of the covering 1 and therefore a very desirable packaging for meat is provided. Further, the gas within the package is under a slight pressure relative to atmosphere and hence the covering 1 is bowed outwardly in a balloon fashion, thereby assisting in maintaining the covering 1 in substantially non rupturable condition.

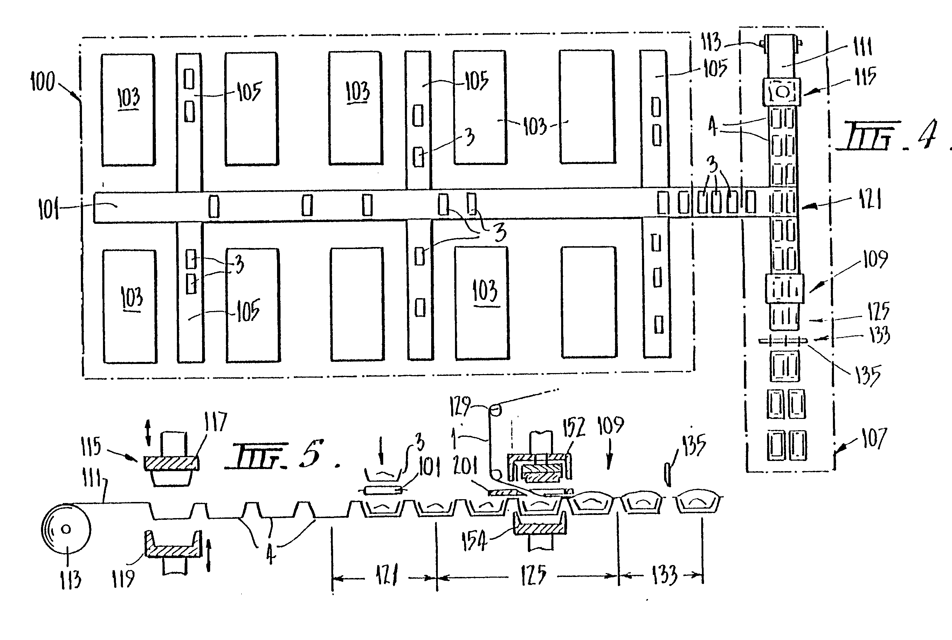

Referring now to Figure 4 there is shown a block schematic diagram of a typical packaging installation at a meat processing plant. In the installation there is provided a boning room 100 and in that boning room there is a main conveyor 101. The main conveyor 101 extends from a plurality of boning stations 103. Each of the boning stations 103 has secondary conveyors 105 thereat. In use, boners dissect meat at the boning stations 103 and place meat into the trays 3 which may be provided in suitable nested stacks at the boning stations 103. The meat packaged in the trays 3 is then placed onto the secondary conveyors 105 where the packages are transferred onto the main conveyor 101 and subsequently discharged from the boning room 100 into a packaging room 107. In the packaging room 107 there is provided a packaging machine 109.

Referring now to Figure 5 there is shown a schematic side view of a typical packaging machine 109 as shown in Figure 4. The packaging machine 109 packs two trays 3 of meat simultaneously i.e. in side by side relation to each other.

In the packaging machine installation shown in Figure 4, preformed pairs of bases 4 are produced side by side in a continuous web of material 111 which is wound on a roll 113. The preform bases 4 are produced at a preform forming station 115. Here, there are dies 117 and 119 which are advanced towards the web 111 to thermo-form the shape of the preform bases 4 therein. The dies 117 or 119 may be heated or alternatively the web 111 may be heated just prior to entering the dies 117 and 119. The preform bases 4 are then advanced to a tray loading station 121 where trays 3 with meat therein are delivered from the conveyor 101 to the packaging machine 109.

The preform bases 4, the trays 3 and the meat therein are then advanced to a gas flushing and sealing station 125. At the gas flushing and sealing station 125, covering material 1 in web form is unwound from a pair of side by side rolls (not shown) of covering material 1 and passed over rollers 129 so that the webs of covering material 1 lie over the tops of respective ones of a pair of aligned side by side, open preform bases 4 with the trays 3 and meat therein.

Gas flushing and sealing then occurs.

The packages are then advanced to a guillotine station 133 where the packages are removed from the web 111 and discharged into a storage area. A guillotine 135 is used to sever the packages across the web 111. A slitting knife, not shown, is used to slit the two side by side packages from the web 111.

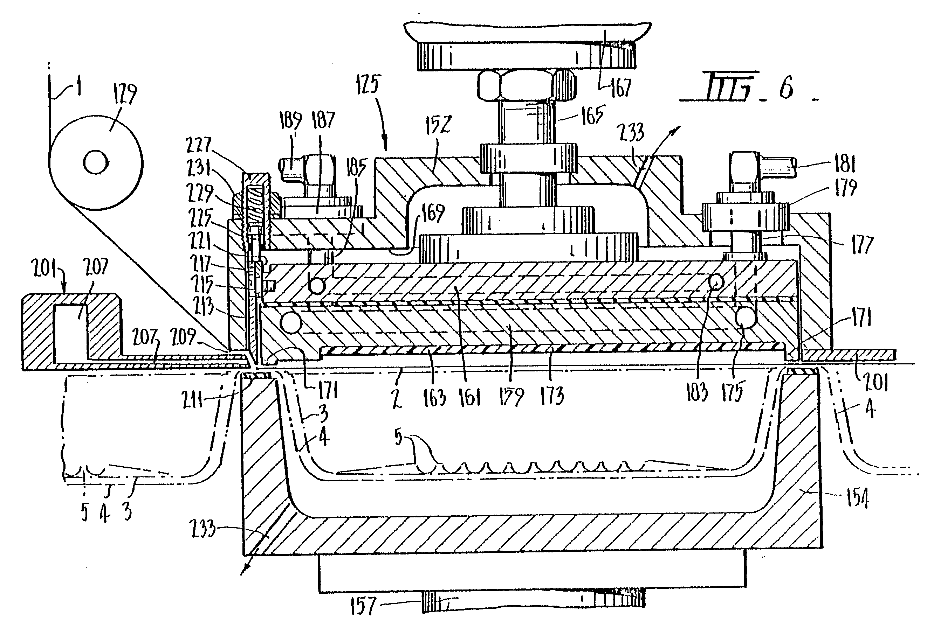

Referring now to Figures 6 and 7 there is shown a detailed side cross-sectional view of the gas flushing and hermatic sealing station 125. The gas flushing and hermatic sealing station 125 includes an upper chamber 152 which is in use held stationary and a lower chamber 154. The lower section 154 is arranged for reciprocating movement on a ram 157. Thus, in use, the lower chamber 154 can be brought upwardly to mate on the undersurfaces of the upper chamber 152 thereby providing a substantially closed chamber at the gas flushing and hermatic sealing station 125. The upper chamber 152 has a platen 159 therein. The platen 159 is fastened to a further platen 161 with a web of thermally insulating material 163 sandwiched therebetween. The upper platen 161 is fastened to a ram 165 which, in turn, is connected with an air bag 167 which can cause the platens 161 and 159 to move upwardly and downwardly within the upper chamber 152.

In Figure 6 the platens 161 and 159 are shown in the downwardly extended position. When they are in the upwardly retracted position, they assume a position near the upper inside surface 169 of the upper chamber 152. The platens 161 and 159 extend across the width of two packages in the packaging machine. By inspecting Figure 6 it can be observed that the platen 159 has peripheral downwardly protruding sealing edges 171. These downwardly protruding sealing edges 171 extend around the perimeter of each of the bases 4 of the outer coverings 1. The lower chambers 154 are divided into two parts such that the bases 4 and trays 3 which are nested in the bases 4 can locate in a respective one of the two parts of the lower chamber 154. This is clearly shown in Figure 7.

The undersurface of the platen 159 is relieved in the central area thereof and contains an insulation material 173. The insulation material 173 may be of asbestos or of other known thermally insulating material. The purpose of the insulating material 173 is to extend over a major part of the lower surface of the platen 159 so that the lid 2 will not touch the undersurface of the platen 159 except around the peripheral edges 171. It will be appreciated that the platen 159 is heated in order to effect hermatic sealing of the lid 2 to the base 4. The heating may be by an impulse heating means or as shown in the embodiment it may be by passing heated liquid through passageways 175 therein. Typically the passageways 175 form a tortuous pass across the platen 159 so that it is heated generally uniformly. The heated liquid is passed to and from the passageways 175 through vertically rising steel pipes 177 which rise through the upper platen 161 and through the upper surface of the upper chamber 152. A gland means 179 is provided on the pipes 177 and on the upper chamber 152 and allows for reciprocated sliding movement of the pipe 177 as the platens 159 and 161 are raised and lowered by the ram 165 and also permits an airtight seal with the chamber 152. Flexible pipes such as hoses 181 can be attached to the tops of the pipes 177 to enable the heated liquids to pass through the passageways 175.

The upper platen 161 is cooled rather than heated. The purpose of this will be explained in due course. Here cooling fluids are passed through passageways 183 which also form a tortuous path across the upper platen 161. Steel pipes 185 connect with the passageway means 183 and pass through glands 187 fastened to the upper chamber 152 and allow for sliding move-

ment of the pipes 185 therethrough as the platens 161 and 159 are raised and lowered. Hoses 189 can be connected to the tops of the pipes 185 to allow the cooling fluids to pass through the pipes 185 and into the passageways 183.

The thermally insulating material 163 is placed between the platens 159 and 161 to thermally isolate each platen from the other.

A gas flushing member 201 is provided between the upper and lower chambers 152 and 154. The gas flushing member 201 is attached to the upper chamber 152. The gas flushing member 201 has two rectangular shaped openings 203 therein which respectively align with the two parts of the lower chamber 154 in which the bases 4, and preforms 3 are located. The gas flushing member 201 is typically of metal such as brass.

It can be seen that the covering material 1 which is used to provide the lids 2 of the packages passes through the respective openings 203. Accordingly the webs 1 pass around the roller 129 across the top of the gas flushing member 201 and through the openings 203 and then across the undersurface of the gas flushing member 201 at the other side of the gas flushing member 201 to which the roller 129 is positioned.

The gas flushing member 201 has central passageway means 207 therein which communicate with each of the openings 203. It can be seen that the passageways 207 terminate with the openings 203 midway between the thickness of the gas flushing member 201 where it passes underneath the upper chamber 152. A small space 209 is provided between the gas flushing member 201 and the lower edge surface of the upper chamber 152 where the covering material 1 passes from the top of the gas flushing member 201 through the openings 203. This is clearly shown in Figure 6.

The upper surface of the lower chamber 154 is provided with a neoprene sheet 211 which surrounds the two parts in the lower chamber 154 in which the bases 4 and the trays 3 are received. The neoprene sheet 211 is provided to effect substantial atmosphere sealing of the chambers 152 and 154 when those chambers are brought together to define a closed gas flushing and hermatic sealing station 125. It is noted, however, that there is not complete sealing because there is a small space provided by the opening 209 where the covering material 1 passes into the gas flushing and hermatic sealing station 125.

The platen 161 carries two spring loaded pushing knife like members 213. The knives 213 extend across the width of a respective one of the two parts of the lower chamber 154 in which the bases 4 and trays 3 are received. The knives 213 each comprise a bar like metal member which is attached to the upper platen 161. The attachment is by way of four screws 215 which pass into the side of the upper platen 161 which is adjacent the outlet of the passages 207 in the gas flushing member 201. The screws 215 each have their heads located in respective elongate slots 217, such that the knives 213 can move upwardly and downwardly at the side edge of the platens 161 and 159. A planar bearing material 221 is provided between the knives 213 and the side edge of the upper platen 161. The bearing material 221 allows for relatively easy sliding movement of the knives 213 in the up and down direction.

The knives 213 are connected at their upper edge surfaces with four push rods 225 which, in turn, are slidably received within respective tubular members 227. Each tubular member 227 is threaded on its external surfaces and is screw threaded in a suitable aperture in the upper surface of the upper chamber 152. Thus, the tubular member 227 can be extended or retracted into the aperture. A compression spring 229 is fitted within the tubular member 227 and by appropriate screw adjustment of the screw member 227 desired pressure can be applied from the spring 229 to the top of the push rods 225 to, in turn, bias the knives 213 to the downwardly extended position. A suitable respective lock nut 231 holds the tubular threaded member in the desired adjusted position. The push rods 225 and tubular members 227 are positioned uniformly spaced apart along the length of the knives 213 so that the knives 213 are urged downwardly substantially uniformly along their length.

When the platens 161 and 159 are raised the push rods 225 compress the springs 229. When the platens 161 and 159 are extended downwardly to the position shown in Figure 6, the springs 229 maintain the knives 213 extended downwardly below the lower surface of the downwardly extending sealing edges 171 of the platen 159 so that the lowermost edge of the knives 213 contacts the web 1 and pushes the web 1 downwardly onto the upper surface of the neoprene sheet 211. This is provided to inhibit the web of material 1 from contacting the heated lower platen 159 until the web 1 is brought down to engage the peripheral lip of the base 4.

Because the upper platen 161 is cooled, knives 213 are cooled — i.e. they are at a lower temperature than that of the heated platen 159. Thus, the lowermost edge of the knives 213 do not effect any heat sealing of the upper web 1 to the peripheral lip of the base 4.

Air evacuation openings 233 are provided in the upper and lower chambers 152 and 154. In use air is evacuated from these openings when the upper and lower chambers 152 and 154 are closed and prior to insertion of gas through the gas flushing member 201.

The sequence of operation of the gas flushing and sealing station 125 is as follows. When the bases 4, complete with trays 3 and with meat therein are indexed into the gas flushing and sealing station 125 they locate directly above the two parts in the lower chamber 154. In this position the lower chamber 154 is retracted to allow the bases 4 and trays 3 and meat to index into this position. The lower chamber 154 is then closed by extending ram 157. The platens 161 and 159 are retracted at this stage. Air is evacuated through the air evacuation openings 233 in both the upper and lower chambers 152 and 154. After the air is being evacuated, gas is introduced via the gas flushing member 201 so that it leaves the passageway means 207 and passes into the bases 4 and trays 3 between the upper lip of the bases 4 and the webs of material 1. Thus, air which is exhausted through the air evacuation openings 233 is replaced by a gas such as 80% $O_2$ and 20% $CO_2$. After a sufficient time to allow for the base 4 and tray 3 to be filled with this gas, the platens 161 and 159 are lowered. The lowermost surface of the blade 213 then contacts the upper surface of the material 1 of the lid 2 and causes it to engage with the upper surface of the lip of the base 4 on the neoprene sheet 211. The gas supply to the gas passages 207 is then stopped. Continued downward movement of the platens 161 and 159 causes the lower platen 159 to engage with the upper surface of the material 1 of the lid 2 and to effect hermatic heat sealing of the lid 2 to the base 4. Thus the gas is hermatically sealed within the package. The platens 161 and 159 are then retracted and the lower chamber 154 is also retracted. The package is then indexed out of the gas flushing and sealing station 125. In this condition, the package is integrally connected with the web of material 111 from which the bases 4 are made.

After the packages are indexed out of the gas flushing and sealing station 125, they pass into the separating station 133 where the packages are separated from the web of material from which the bases 4 are made by the knife 135 and by a slitting knife (not shown).

Appropriate hydraulic and/or pneumatic circuitry and appropriate electronic circuitry is provided to effect the necessary indexing and operation of various rams and knifes and operation of air evacuation and gas flushing. The design of these items is considered within the skill of any addressee familiar with the art of packaging machines generally. Accordingly it has not been disclosed herein as it does not form any part of the inventive concepts.

The packages so produced will provide for a generally long shelf life of the packaged meat.

It should also be appreciated that because the gas which is trapped within the base 4 and the lid 2 is totally available for circulating within the package by reason of the openings 17 in the peripheral lip of the tray 3 and by reason of the openings 18 in the bottom corners of the tray 3, that a relatively smaller pack can be provided than with other types of packages where for example there is no circulation of gas which may be trapped in the spaces 33 and 35 between the tray 3 and the base 4. Thus, substantially more product can be packed in any given space. Desirably the packs are made sufficiently large as to accommodate desired weights of meat.

It should be appreciated that because the gas which is introduced into the package 1 is under a slight pressure relative to atmosphere, that the package 1 is initially inflated somewhat and bows slightly outwardly. This enables the package to have a substantially outwardly directed forced supplied to the packaging materials of the lid 1 and the base 4 and this generally inhibits easy rupturing of the lid 2 or the base 4 material. It should also be appreciated that the tray 3 is not attached in any way to the lid 2 or the base 4. It merely rests between the lid 2 and the base 4.

The openings 18 in the bottom corners of the trays 3 also allow the trays 3 to easily drop into the bases 4, as such openings allow air under the trays 3 to readily escape during the insertion process. It has been found that if the openings are not present then the air trapped between the trays 3 and the bases 4 can cause upwardly directed forces to be applied to the trays 3 during the insertion process and such forces can cause the trays 3 to skew slightly within the bases and completely upset the operation of the packaging machine.

If the packaging is to contain fresh vegetables it is desirable that the outer covering, i.e. the lid 2 and the preform base 4, be of a material that will allow any $CO_2$ which may generate within the package to escape and allow $O_2$ to permeate into the package to replace the $CO_2$ which escapes. Accordingly, it is desirable for the outer covering material to be made of polyethylene or like plastics material which will permit this to occur.

It should also be appreciated, that some products to be packaged, such as fish or poultry, will absorb $CO_2$ from the gas after packaging. With the present apparatus and packaging, it is possible to over inflate the package to a desired amount initially, so that when the $CO_2$ is absorbed, the final volume of the package will be the required volume. If the outer packaging material has NYLON as one of the web materials, then NYLON has a memory, and thus the natural shrinkage which occurs because of this memory when the outer packaging material reduces in volume because of the absorbtion of some of the gas into the product, can be equated to this memory shrinkage so that the outer packaging material will not be slack or even worse, shrunk to a degree that collapses and ruptures the package. This permits the outer packaging to be in a condition which inhibits total collapse or rupturing which may otherwise occur if it were not compensated for. Thus, with the present packaging it can contain 100% $CO_2$ if desired without any real packaging problems occuring.

## Claims

1. An improved packaging method for producing an air evacuated and desired gas filled package, said method comprising: providing a cup shaped depression in a web (111) of package material to provide a packaging base (4), providing a product in said depression, providing a cover (2) for said base (4), providing a gas flushing member (201) between the cover (2) and the base (4) and sealing said cover (2) and said base (4) together, closing an air evacuation chamber (152, 154) over the components and the gas flushing member (201) so that it makes a substantially air tight seal with said one face and said opposite face, evacuating air from said air evacuation chamber (152, 154) so that air within said depression will be evacuated, expelling desired gas from said gas passageway means (207) so that it discharges between said cover (2) and said base (4) and can enter said depression, and sealing the cover (2) to said base (4) around the edge surfaces of said depression to provide said air evacuated and desired gas filled package, characterised in that the gas flushing member (201) is plate like and has an opening (203) therethrough; in that said cover (2) is passed through said opening (203) so that it extends from one face of the gas flushing member (201) through said opening (203), to the opposite face of the gas flushing member (201) and over said depression, said gas flushing member (201) having gas passageway means (207) therein which terminate with said opening (203) in the region where said cover (2) passes through opening (203) from said one face.

2. A method as claimed in claim 1, characterised in that said web (111) in which said depression is formed is elongate and there is provided a step of forming a plurality of depressions along the length thereof.

3. A method as claimed in claim 2, characterised in that the gas passageway means (207) terminate at a side of said opening (203) which is between adjacent depressions and closest to the next depression to be sealed in said web (111).

4. A method as claimed in either claim 2 or claim 3, characterised by the step of separating said air evacuated and desired gas filled package from said web (111) after sealing of said cover thereto.

5. A method as claimed in any one of the preceding claims, characterised in that a platen (159) is provided within said air evacuation chamber (152, 154) and in that said platen (159) is moved towards said cover (2) after the desired gas has been expelled, to close said cover (2) over said depression to effect sealing of said cover (2) to said base (4).

6. A method as claimed in claim 5, characterised in that said platen (159) is heated to effect heat sealing of said cover (2) to said base (4).

7. A method as claimed in claim 6, characterised in that the portion of said cover (2) which is adjacent said one surface of said gas flushing member (201) is pushed against said edge surface of said depression with a member (213) which is cooler than said platen (159) prior to causing said platen (159) to touch said cover (2) and then effecting said heat sealing of said cover (2) to said base (4).

8. A method as claimed in any one of the preceding claims, characterised in that a tray (3) is provided in said depression and said product is provided in said tray (3).

9. A method as claimed in claim 8, characterised in that said product is placed in said tray (3) at a tray loading station (121) and the loaded tray (3) is then placed in said depression.

10. Apparatus for producing packaging comprising a gas flushing and sealing station (125), means (154) for receiving a base with a product therein, a cover (2) therefor, said gas flushing and sealing station (125) including a first chamber part (152) and a second chamber part (154) which together define an air evacuation chamber, said second chamber part (154) being for receiving said bases (4) with said product therein, said first chamber part (152) and said second chamber part (154) being, in use, closeable onto a gas flushing member (201), characterised in that said gas flushing member (201) is plate like and has one face and an opposite face with an opening (203) therethrough, through which said cover (2) can pass to extend over said base (4), said gas flushing member (201) having gas passageway means (207) therein which terminate with said opening (203) in the region where, in use, said cover (2) passes through said opening (203) from said one face, and in that said first chamber part (152) has sealing means (159) therein for effecting sealing of said cover (2) to said base (4).

11. Apparatus as claimed in claim 10, characterised in that said sealing means (159) is a platen (159) which is, in use, connectible with heating means whereby said platen (159) can be heated to effect heat sealing of said cover (2) to said base (4).

12. Apparatus as claimed in claim 11, characterised in that said platen (159) carries a member (213) which extends forwardly of the pressing surface of said platen (159), said member (213) being mounted to push the portion of said cover (2) which extends from said one face through said opening (203), against said edge surface of the depression, prior to said platen (159) pressing cover (2) against said base (4).

13. Apparatus as claimed in claim 12, characterised in that said member (213) is not directly heated by said heating means and is therefore cooler than the pressing surface of said platen (159).

14. Apparatus as claimed in claim 13, characterised in that said platen (159) is in two parts (161, 159) one part (159) including the pressing face and being heated, said member (213) being mounted to the other part (161).

15. Apparatus as claimed in claim 14, characterised in that said other part (161) is cooled by cooling means.

16. Apparatus as claimed in either claim 14 or claim 15, characterised in that said member (213) is mounted to said other part (161).

17. Apparatus as claimed in any one of claims 10 to 16, characterised in that said first chamber part (152) and said second chamber part (154) have air evacuation means connected therewith.

**Patentansprüche**

1. Verbessertes Verpackungsverfahren zur Erzeugung einer luftevakuierten und mit einem gewünschten Gas gefüllten Verpackung, wobei das Verfahren aufweist: Schaffen einer tassenförmigen Vertiefung in einem Band (111) eines Verpackungsmaterials, um einen Verpackungsgrundkörper (4) zu bilden, Einbringen eines Produktes in die Vertiefung, Anordnen einer Abdeckung (2) für den Grundkörper (4), Vorsehen eines Gaseinspülteiles (201) zwischen der Abdeckung (2) und dem Grunndkörper (4) und Abdichten der Abdeckung (2) und des Grundkörpers (4) aneinander, Schließen einer Luftevakuierungskammer (152, 154) über den Teilen und dem Gaseinspülteil (201), so daß sie im wesentlichen eine luftdichte Abdichtung mit der einen Seite und der gegenüberliegenden Seite herstellt, Evakuieren von Luft aus der Luftevakuierungskammer (152, 154), so daß die Luft innerhalb der Vertiefung evakuiert wird, Verdrängen des gewünschten Gases aus der Gaskanaleinrichtung (207), so daß es zwischen der Abdeckung (2) und dem Grundkörper (4) austritt und in die Vertiefung eintreten kann, und Abdichten der Abdeckung (2) an dem Grundkörper (4) rund um die Kantenflächen der Vertiefung, um die Luftevakuierte und mit dem gewünschten Gas gefüllte Verpackung zu erhalten, dadurch gekennzeichnet, daß das Gaseinspülteil (201) plattenförmig ist und eine Durchgangsöffnung (203) aufweist, daß die Abdeckung (2) durch die Öffnung (203) hindurchgeführt ist, so daß sie sich von einer Seite des Gaseinspülteiles (201) durch die Öffnung (203) zur gegenüberliegenden Seite des Gaseinspülteiles (201) und über die Vertiefung hinweg erstreckt, in dem Gaseinspülteil (201) eine Gaskanaleinrichtung (207) vorgesehen ist, die in der Öffnung (203) in dem Bereich endet, in dem die Abdeckung (2) durch die Öffnung (203) von der einen Seite her hindurchgeht.

2. Verfahren nach Anspruch 1, dadurch gekennzeichnet, daß das Band (111), in dem die Vertiefung ausgebildet ist, langgestreckt ist und daß ein Verfahrensschritt der Bildung einer Mehrzahl von Vertiefungen entlang der Länge (des Bandes) vorgesehen ist.

3. Verfahren nach Anspruch 2, dadurch gekennzeichnet, daß die Gaskanaleinrichtung (207) an einer Seite der Öffnung (203) endet, die zwischen benachbarten Vertiefungen und am nächsten zu der nächstfolgenden Vertiefung in dem Band (111) liegt, die abgedichtet bzw. versiegelt werden soll.

4. Verfahren nach Anspruch 2 oder 3, gekennzeichnet durch den Schritt der Trennung der Luftevakuierten und mit dem gewünschten Gas gefüllten Verpackung von dem Band (111) nach dem Abdichten der Abdeckung an dieser.

5. Verfahren nach einem der vorhergehenden Ansprüche, dadurch gekennzeichnet, daß eine Platte (159) innerhalb der Luftevakuierungskammer (152, 154) vorgesehen ist und daß die Platte (159) zu der Abdeckung (2) bewegt wird, nachdem das gewünschte Gas ausgebracht worden ist, um die Abdeckung (2) über der Vertiefung zu schließen, um die Abdichtung der Abdeckung (2) an dem Grundkörper (4) zu bewirken.

6. Verfahren nach Anspruch 5, dadurch gekennzeichnet, daß die Platte (159) erwärmt ist, um ein Heißsiegeln der Abdeckung (2) an dem Grundkörper (4) auszuführen.

7. Verfahren nach Anspruch 6, dadurch gekennzeichnet, daß der Abschnitt der Abdeckung (2), die benachbart zu der einen Oberfläche des Gaseinspülteiles (201) liegt, gegen die Kantenfläche der Vertiefung mit einem Teil (213) gedrückt wird, das kälter ist als die Platte (159), und zwar ehe die Platte (159) veranlaßt wird, die Abdeckung (2) zu berühren, und anschließend das Heißversiegeln der Abdeckung (2) an dem Grundkörper (4) ausgeführt wird.

8. Verfahren nach einem der vorhergehenden Ansprüche, dadurch gekennzeichnet, daß eine Schale (3) in der Vertiefung vorgesehen ist und das Produkt in der Schale (3) aufgenommen wird.

9. Verfahren nach Anspruch 8, dadurch gekennzeichnet, daß das Produkt in die Schale (3) in einer Schalenbeschickungsstation (121) eingelegt wird und die beschickte Schale (3) anschließend in die Vertiefung eingesetzt wird.

10. Einrichtung zur Erzeugung einer Verpackung, mit einer Gaseinspül- und Versiegelungsstation (125), einer Einrichtung (154) zur Aufnahme eines Grundkörpers mit einem Produkt in diesem, einer Abdeckung (2) dafür, wobei die Gaseinspül- und Versiegelungsstation (125) einen ersten Kammerteil (152) und einen zweiten Kammerteil (154) aufweist, die zusammen eine Luftevakuierungskammer begrenzen, der zweite Kammerteil (154) zur Aufnahme der Grundkörper (4) mit dem Produkt in diesen vorgesehen ist, der erste Kammerteil (152) und der zweite Kammerteil (154), in Gebrauch, auf einem Gaseinspülteil (201) abschließbar sind, dadurch gekennzeichnet, daß das Gaseinspülteil (201) plattenförmig ist und eine Seite und eine gegenüberliegende Seite mit einer Durchgangsöffnung (203) aufweist, durch die die Abdeckung (2) hindurchtreten kann, um sich über den Grundkörper (4) zu erstrecken, wobei in dem Gaseinspülteil (201) eine Gaskanaleinrichtung (207) vorgesehen ist, die in der Öffnung (203) mündet, in dem Bereich, in dem in Gebrauch die Abdeckung (2) durch die Öffnung (203) von der einen Seite hindurchtritt, und daß das erste Kammerteil (102) eine Abdicht- bzw. Versiegelungseinrichtung (159) aufweist, um die Abdeckung (2) an dem Grundkörper (4) abzudichten bzw. zu versiegeln.

11. Einrichtung nach Anspruch 10, dadurch gekennzeichnet, daß die Abdichteinrichtung (159) eine Platte (159) ist, die, bei Gebrauch, mit einer Heizeinrichtung verbindbar ist, wodurch die Platte (159) erwärmt werden kann, um ein Heißsiegeln der Abdeckung (2) an dem Grundkörper (4) auszuführen.

12. Einrichtung nach Anspruch 11, dadurch gekennzeichnet, daß die Platte (159) ein Teil (213) trägt, das sich in Bezug auf die Druckfläche der Platte (159) nach vorne erstreckt, und das Teil (213) befestigt ist, um den Teil der Abdeckung (2), der sich von der einen Seite durch die Öffnung (203) erstreckt, gegen die Kantenfläche der Vertiefung zu drücken, ehe die Platte (159) die Abdekkung (2) gegen den Grundkörper (4) preßt.

13. Einrichtung nach Anspruch 12, dadurch gekennzeichnet, daß das Teil (213) nicht direkt durch die Heizeinrichtung erwärmt wird und daher kühler ist als die Preßfläche der Platte (159).

14. Einrichtung nach Anspruch 13, dadurch gekennzeichnet, daß die Platte (159) in zwei Teilen (161, 159) ausgebildet ist, wobei ein Teil (159) die Preßfläche enthält und erwärmt wird und das Teil (213) an dem anderen Teil (161) befestigt ist.

15. Einrichtung nach Anspruch 14, dadurch gekennzeichnet, daß der andere Teil (161) durch eine Kühleinrichtung gekühlt wird.

16. Einrichtung nach Anspruch 14 oder 15, dadurch gekennzeichnet, daß das Teil (213) an dem anderen Teil (161) befestigt wird.

17. Einrichtung nach einem der Ansprüche 10 bis 16, dadurch gekennzeichnet, daß das erste Kammerteil (152) und das zweite Kammerteil (154) eine mit diesen verbundene Luftevakuierungseinrichtung aufweisen.

**Revendications**

1. Procédé perfectionné de conditionnement destiné à la formation d'un emballage dont l'air est évacué et qui est rempli d'un gaz voulu, le procédé comprenant la formation d'une cavité en forme de cuvette dans une feuille continue (111) d'un matériau d'emballage afin qu'une base (4) d'emballage soit formée, la disposition d'un produit dans la cavité, la disposition d'un couvercle (2) pour la base (4), la disposition d'un organe de balayage par un gaz (201) entre le couvercle (2) et la base (4), et le scellement du couvercle (2) et de la base (4) l'un sur l'autre, la fermeture d'une chambre d'évacuation d'air (152, 154) sur les différents éléments et l'organe de balayage par un gaz (201) afin qu'un joint pratiquement hermétique soit formé avec une première face et la face opposée, l'évacuation de l'air de la chambre d'évacuation d'air (152, 154) afin que l'air présent dans la cavité soit évacué, l'éjection du gaz voulu d'un passage de gaz (207) afin qu'il passe entre le couvercle (2) et la base (4) et puisse pénétrer dans la cavité, et le scellement du couvercle (2) sur la base (4) autour des surfaces du bord de la cavité afin qu'un emballage dont l'air est évacué et qui est rempli d'un gaz voulu soit formé, caractérisé en ce que l'organe de balayage par un gaz (201) a une forme de plaque et a une ouverture (203) qui le traverse, en ce que le couvercle (2) passe par l'ouverture (203) afin qu'il soit disposé de la première face de l'organe (201) de balayage par un gaz à l'ouverture (203), à la face opposée de l'organe de balayage par un gaz (201) et au-dessus de la cavité, l'organe de balayage par un gaz (201) ayant le passage de gaz (207) qui aboutit à l'ouverture (203) dans la région dans laquelle le couvercle (2) passe par l'ouverture (203) à partir de la première face.

2. Procédé selon la revendication 1, caractérisé en ce que la feuille continue (111) dans laquelle est formée la cavité est allongée, et il comporte une étape de formation de plusieurs cavités le long de la feuille.

3. Procédé selon la revendication 2, caractérisé en ce que le passage de gaz (207) aboutit d'un côté de l'ouverture (203) qui est compris entre des cavités adjacentes et qui est la plus proche de la cavité suivante qui doit être scellée dans la feuille (111).

4. Procédé selon la revendication 2 ou 3, caractérisé par l'étape de séparation de l'emballage, dont l'air est évacué et qui est rempli du gaz voulu, de la feuille (111) après le scellement du couvercle sur lui.

5. Procédé selon l'une quelconque des revendications précédentes, caractérisé en ce qu'un plateau (159) est disposé dans la chambre d'évacuation d'air (152, 154), et en ce que le plateau (159) est déplacé vers le couvercle (2) après que le gaz voulu a été éjecté, afin que le couvercle (2) soit fermé sur la cavité et assure le scellement du couvercle (2) sur la base (4).

6. Procédé selon la revendication 5, caractérisé en ce que le plateau (159) est chauffé afin que le couvercle (2) soit thermosoudé sur la base (4).

7. Procédé selon la revendication 6, caractérisé en ce que la partie du couvercle (2) qui est adjacente à la première face de l'organe de balayage par un gaz (201) est poussée contre une surface de bord de cavité avec un organe (213) qui est plus froid que le plateau (159) avant que le plateau (159) ne touche le couvercle (2), et le thermosoudage du couvercle (2) est alors réalisé sur la base (4).

8. Procédé selon l'une quelconque des revendications précédentes, caractérisé en ce qu'une barquette (3) est disposée dans la cavité, et le produit est disposé dans la barquette (3).

9. Procédé selon la revendication 8, caractérisé en ce que le produit est placé dans la barquette (3) à un poste (121) de chargement de barquettes, et la barquette chargée (3) est alors placée dans la cavité.

10. Appareil de conditionnement comprenant un poste de balayage par un gaz et de scellement (125), un dispositif (154) destiné à loger une base avec un produit à l'intérieur, un couvercle (2) destiné à la base, le poste de balayage par un gaz et de scellement (125) comprenant une première partie de chambre (152) et une seconde partie de chambre (154) qui délimitent ensemble une chambre d'évacuation d'air, la seconde partie de chambre (154) étant destinée à loger les bases (4) contenant le produit à l'intérieur, la première partie de chambre (152) et la seconde partie de chambre (154) pouvant être fermées, pendant l'utilisation, sur un organe de balayage par un gaz (201), caractérisé en ce que l'organe de balayage par un gaz (201) est analogue à un plaque et a une première face et une face opposée, avec une ouverture (203) qui les traverse, permettant le passage du couvercle (2) afin qu'il soit disposé sur la base (4), l'organe de balayage par un gaz (201) ayant un passage (207) de circulation de gaz qui aboutit à ladite ouverture (203) dans la région dans laquelle, pendant l'utilisation, le couvercle (2) passe par l'ouverture (203) depuis la première face, et en ce que la première partie de chambre (152) a un dispositif d'étanchéité (159) placé à l'intérieur et destiné à assurer le scellement du couvercle (2) sur la base (4).

11. Appareil selon la revendication 10, caractérisé en ce que le dispositif de scellement (159) est un plateau (159) qui, pendant l'utilisation, est destiné à être raccordé à un dispositif de chauffage, afin que le plateau (159) puisse être chauffé et puisse assurer le thermosoudage du couvercle (2) sur la base (4).

12. Appareil selon la revendication 11, caractérisé en ce que le plateau (159) porte un organe (213) qui dépasse en avant de la surface de pression du plateau (159), l'organe (213) étant monté de manière qu'il repousse la partie du couvercle (2) qui dépasse de la première face dans l'ouverture (203), contre la surface du bord de la cavité, avant que la plateau (159) ne repousse le couvercle (2) contre la base (4).

13. Appareil selon la revendication 12, caractérisé en ce que ledit organe (213) n'est pas chauffé directement par le dispositif de chauffage et est donc plus froid que la surface de pression du plateau (159).

14. Appareil selon la revendication 13, caractérisé en ce que le plateau (159) est en deux parties (161, 159), une première partie (159) ayant la face de pression et étant chauffée, ledit organe (213) étant monté sur l'autre partie (161).

15. Appareil selon la revendication 14, caractérisé en ce que l'autre partie (161) est refroidie par un dispositif de refroidissement.

16. Appareil selon la revendication 14 ou 15, caractérisé en ce que ledit organe (213) est monté sur l'autre partie (161).

17. Appareil selon l'une quelconque des revendications 10 à 16, caractérisé en ce que la première partie de chambre (152) et la seconde partie de chambre (154) ont un dispositif d'évacuation d'air qui leur est raccordé.

FIG. 1 -

FIG. 2.

FIG. 3.

FIG. 4.

FIG. 5.

3

_Fig_ . 6 _

EP 0 176 514 B1

FIG. 7.

FIG. 8.

EP 0 176 514 B1